**Europäisches Patentamt**

**European Patent Office**

**Office européen des brevets**

(19)

(11) Veröffentlichungsnummer: **0 211 181**
**B1**

(12) # EUROPÄISCHE PATENTSCHRIFT

(45) Veröffentlichungstag der Patentschrift:
**20.09.89**

(51) Int. Cl.⁴: **B27K 3/52**

(21) Anmeldenummer: **86107761.8**

(22) Anmeldetag: **06.06.86**

(54) Holzschutzmittel.

(30) Priorität: **07.06.85 DE 3520394**

(43) Veröffentlichungstag der Anmeldung:
**25.02.87 Patentblatt 87/9**

(45) Bekanntmachung des Hinweises auf die Patenterteilung:
**20.09.89 Patentblatt 89/38**

(84) Benannte Vertragsstaaten:
**AT BE CH DE FR GB IT LI NL SE**

(56) Entgegenhaltungen:
**EP-A- 0 058 142**
**AU-B- 519 146**
**DE-A- 2 418 859**
**DE-B- 1 077 476**
**DE-B- 2 838 930**
**US-A- 2 310 257**
**US-A- 4 045 280**

**CHEMICAL ABSTRACTS, Band 97, Nr. 26, 27.**
**Dezember 1982, Seite 119, Zusammenfassung**
**Nr. 218244g, Columbus, Ohio, US; H. GREAVES et al.:**
**"Studies of preservative treatments for hardwoods in**
**ground contact. 1. Penetration of cell walls by**
**formulations containing copper", &**
**HOLZFORSCHUNG 1982, 36(5), 225-31 000**

(73) Patentinhaber: **Dr. Wolman GmbH,**
**Dr.-Wolman-Strasse 31-33, D-7573 Sinzheim(DE)**

(72) Erfinder: **Goettsche, Reimer, Dr., Waldstrasse 27,**
**D-7570 Baden-Baden 19(DE)**
Erfinder: **Marx, Hans-Norbert, Mozartweg 8,**
**D-7580 Beuhl-Weitenung(DE)**
Erfinder: **Hettler, Wendelin, Panoramastrasse 9,**
**D-7573 Sinzheim-Muellhofen(DE)**
Erfinder: **Stanek, Richard, Dr.,**
**Wuermersheimerstrasse 35, D-7552 Durmersheim(DE)**
Erfinder: **Heidenreich, Hans-Peter,**
**Heiligensteinstrasse 3, D-7570 Baden-Baden 23(DE)**

(74) Vertreter: **Schweiss, Werner, Dr. et al,**
**Carl-Bosch-Strasse 38, D-6700 Ludwigshafen(DE)**

**Beschreibung**

Die Erfindung bezieht sich auf die Bereitstellung von Mitteln zur Kesseldruckimprägnierung von (massivem) Holz auf der Grundlage wäßriger Zubereitungen von Kupfersalz, Alkanolamin und gegebenenfalls weiterer Bestandteile, insbesondere fungizid wirkenden Salzen, deren Wirkung auf dem Anion beruht, wie borsauren Salzen.

Für den Schutz von Holz, das der Witterung oder Feuchtigkeit ausgesetzt ist oder mit Erdkontakt verbaut wird, werden bislang chormathaltige, fixierende Holzschutzmittel eingesetzt. Diese Holzschutzmittel werden als wäßrige, z.B. 2 bis 6%ige Lösungen entsprechend dem späteren Gefährdungsgrad des zu imprägnierenden Holzes angewendet und zwar mit Hilfe großtechnischer Imprägnieranlagen (Kesseldrucktränkung).

Für den Einsatz im Erdkontakt sind wegen der erforderlichen Wirksamkeit gegen Moderfäule ausschließlich Mittel im Einsatz, die neben Chromat noch Kupfer enthalten. Man unterscheidet zwischen CK-Typ (Basis Kupfer, Chrom), CKB-Typ (Basis Kupfer, Chrom, Bor), CKF-Typ (Basis Kupfer, Chrom, Fluor), CKA-Typ (Basis Kupfer, Chrom, Arsen).

Diese Holzschutzmittel fixieren über den Chromatanteil: Die Chromate reagieren nach der Imprägnierung mit den Bestandteilen des Holzes unter Reduktion zu III-wertigen Chromverbindungen, hierdurch erhöht sich der pH-Wert im Holz, so daß Kupfer-und Chromverbindungen im Holz als wasserunlösliche Verbindungen ausfallen, sie fixieren.

Chromate, d.h. VI-wertige Chromverbindungen stellen jedoch eine erhebliche Gefährdung für die Umwelt dar, wenn durch Leckagen oder durch Witterungseinflüsse während des Fixiervorganges eine Auswaschung auftritt, so daß Oberflächen-, Grundwasser und Trinkwasser verunreinigt werden, der gegenwärtig noch als tolerierbar angesehene Höchstwert der Konzentration liegt z.B. bei 0,05 ppm. Auch wenn das Chrom im Holz in unlöslicher III-wertiger Form vorliegt, kann es durch Oxidation bei der Verbrennung wieder in VI-wertige Chromverbindungen überführt werden, die dann aus der Asche ausgewaschen werden können; hierdurch entstehen Probleme bei der Entsorgung.

Es wurden bisher chromfreie, kupferhaltige, wasserlösliche Holzschutzmittel für die großtechnische Imprägnierung vorgeschlagen, bie denen z.B. Kupferarsenate und -borate durch Komplexbildung mit Ammoniak in wasserlösliche alkalische Form überführt wurden; durch Verdampfung des Ammoniaks und Abpuffern durch Holzinhaltsstoffe (Eigen-pH-Wert des Holzes liegt bei ca. 5) werden diese Mittel im Holz fixiert. Unabhängig von der Geruchsbelästigung können diese Imprägnierlösungen oder auch die Konzentrate durch Abdampfen des Ammoniaks ihre Stabilität verlieren, so daß die Lösungen für eine weitere Imprägnierung nicht mehr geeignet sind. Bei nich ausreichendem Ammoniak-Gehalt wird außerdem die Eindringung des Schutzmittels ins Holz behindert.

Auch Amine, z.B. Ethylendiamin, mit guten komplexbildenden Eigenschaften wurden für Kupfer und Fluor enthaltende Holzschutzmittel zum Schutz von Holzwerkstoffen (also z.B. Spanplatten) empfohlen; diese Mittel werden in hochkonzentrierter Form in den Leim eingemischt und damit auf die Späne gesprüht. Sie sind nicht zum Schutz von Vollholz geeignet, da die Ethylendiamin-Komplexe auch bei Eigen-pH-Werten des Holzes (5–6) beständig sind und nicht fixieren; sie werden im Holz durch Wasser ausgewaschen.

Aus US-A 2 310 257 sind Mischungen von Kupfer, Ammoniak und Triethanolamin bekannt. Es ist ferner bekannt, Mischungen von Kupfer, Ethanolamin und weiteren Wirkstoffen herzustellen (DE-A 2 418 859) oder Mischungen von Kupfer, Ethanolamin und einer organischen Säure (AU-B 519 146). Es ist ferner bekannt, Holzstücke zur Erleichterung der Behandlung mit Alkali vorher mit Kupfer und Ethanolaminen zu imprägnieren (US-A 4 045 280).

Eine Fixierung des Kupfers gelingt nur, wenn organische wasserunlösliche Kupfersalze entstehen können. So wurden Holzschutzmittel beschrieben, die Kupfersalze des N-Nitroso-Cyclohexyl-hydroxylamins (neue Bezeichnung Kupfersalz des N-Cyclohexyldioxydiazeniumoxids, Cu-HDO) enthalten. Das Cu-HDO wird über Polyamine, z.B. Ethylendiamin bzw. Diethylentriamin in Holzschutzkonzentrate überführt, die zur Imprägnierung in Wasser gelöst werden. Sie fixieren im Holz durch Abpufferung mit Hilfe von Holzinhaltsstoffen ab etwa pH 7,5. Diese Fixierung erfolgt aber so schnell, daß bei der Kesseldrucktränkung das Eindringen des Cu-HDO verhindert wird. Z.B. erreicht selbst bei der leicht tränkbaren Kiefer das Cu-HDO lediglich eine äußeren Schicht von etwa 10 bis 15 mm; die Schutzmittelverteilung von außen nach innen nimmt schnell ab.

Werden andere Amine, z.B. Alkanolamine, insbesondere Monoethanolamin, zur Komplexierung eingesetzt, so ist das Cu-HDO nur in hochkonzentrierten Lösungen vollkommen gelöst, bei Verdünnung mit Wasser auf Anwendungskonzentration fällt es wieder aus.

Es wurde nun gefunden, daß die vorstehend beschriebenen Nachteile behoben werden können, wenn man Konzentrate anwendet, die aus (anorganischen) Kupferverbindungen (wasserlöslichen oder unlöslichen, wie z.B. Kupfersulfat, Kupferfluoroborat, Kupferhydroxid, Kupferborat, Kupferfluorid, Kupfercarbonat, Kupferoxychlorid), unter Komplexbildung mit 5 bis 50 Gew.-% Monoethanolamin (bezogen auf das Konzentrat) in wäßriger Lösung erhalten werden, wobei sich bei gebrauchsfertiger Verdünnung ein pH-Wert von mindestens 8 einstellt.

Die wasserverdünnbaren Mittel enthalten − in konzentrierter Form − das Kupfer, berechnet als Element i.a. in einer Menge von 1 bis 15 Gewichtsprozent.

Geeignete Konzentrate enthalten beispielsweise (jeweils Gewichtsprozent)
5 bis 50% Kupfersalz,
5 bis 50% Alkanolamin
bis zu 25% Salz eines fungizid wirkenden Anions
bis zu 5% freies Alkali

wobei die Summe jeweils 100 (Gew.-%) ergibt, sowie gegebenenfalls untergeordnete Mengen an anderen Bestandteilen, wie Aminen, Ammoniak, Korrosionsinhibitoren und erforderlichenfalls Wasser, dessen Anteil jedoch i.a. gering gehalten werden kann und im wesentlichen der Handhabung dient. Die Erfindung erstreckt sich jedoch gleichermaßen auch auf die durch Verdünnung mit Wasser herstellbaren Imprägnierlösungen entsprechend geringerer Einzelkonzentration.

Die Komplexierung kann in Anwesenheit von fungiziden Anionen wie z.B. Boraten oder Fluoriden erfolgen. Durch Auflösen der Kupferverbindungen in Monoethanolamin, gegebenenfalls unter Wasserzusatz, entstehen hochkonzentrierte wasserlösliche Pasten oder flüssige Konzentrate, die in Wasser gelöst zum Imprägnieren von Holz verwendet werden können. Der pH-Wert wird in den verdünnten wäßrigen Imprägnierlösungen mit einem Gehalt von etwa 1 bis 5 Gew.-% an nicht-wäßrigen Bestandteilen gemessen und liegt bei oder über 8, insbesondere bei pH 9 bis 10 (konzentrationsabhängig). Beim Imprägnieren im Kesseldruckverfahren dringt die Kupferkomponente gut in das Holz ein. Die erfindungsgemäßen Holzschutzmittel werden bei der Imprägnierung durch die im Holz enthaltenen Holzsäuren abgepuffert, das Kupfer fällt ab ca. pH = 7 im Holz aus; die Komplexbildungskraft des Alkanolamins reicht nämlich ab pH 7 bis 7,5 nicht mehr aus, das Kupfer in Lösung zu halten, so daß das Kupfer fixiert wird. Die Kupferfixierung liegt in der gleichen Größenordnung wie bei den bisherigen chromat- und kupferhaltigen Holzschutzmitteln, d.h. es werden mindestens 85% im Mittel 90 bis 95% der Kupferkomponente im Holz fixiert. Die Fixierung ist dabei teilweise abhängig vom Gehalt an zusätzlichem Monoethanolamin und gegebenenfalls anderen Alkanolaminen der zur Einstellung des pH-Wertes bei starken Säuren oder fungiziden Anionen benötigt wird; ein gewisser Anteil an pH-verschiebender Wirkung kann aber auch durch Zugabe von z.B. Alkalilauge erzielt werden, z.B. soviel, wie zum Verschieben um bis zu 1 pH erforderlich ist. Im allgemeinen betrifft diese Maßnahme den Anteil an fungiziden Anionen bzw. Säurereste; es kann unabhängig von der Komplexbildung auch durch Alkali, Ammoniak oder andere wasserlösliche Amine oder Alkanolamine auf den notwendigen pH-Wert eingestellt werden.

Als Komplexbildner eignet sich Monoethanolamin; Hierbei wird die Menge an zugesetztem Monoethanolamin und gegebenenfalls anderen Alkanolaminen so bemessen, daß sie einmal zur Komplexbildung des Kupfers ausreicht – (1 g-Atom Kupfer benötigt i.a. 4 mol-Äquivalente Amin) und sich andererseits gegenbenenfalls Alkanolamin-Salze der zusätzlich verwendeten fungiziden Anionen (Fluorid, Borat, Fluoroborat) oder Säureester bilden, so daß sich in der wäßrigen Imprägnierlösung ein pH-Wert von 8 oder mehr, vorzugsweise um pH = 9 bis 10 einstellt.

Zur praktischen Erprobung der Erfindung wurde wie folgt verfahren:

Die Konzentrate wurden in der jeweils angegebenen Menge (4 bzw. 3%) mit Wasser verdünnt und damit Kiefernklötzchen getränkt.

Nach dem Trocknen wurden die genannten Klötzchen 4 Wochen mit destilliertem Wasser gewaschen, wobei das Wasser täglich gewechselt wurde. Danach wurde festgestellt wieviel Kupfer ausgewaschen worden war.

Beispiel 1

Von einer Mischung aus
33,3 Gew.-% $CuSO_4 \cdot 5H_2O$
33,3 Gew.-% Monoethanolamin
33,4 Gew.-% Wasser
werden jeweils 40 g zu 1 Liter in Wasser gelöst – (nachstehend als "4%ige Lösung" bezeichnet).
Kupfer-Auswaschung 7,5%.

Beispiel 2

20,0 Gew.-% $3Cu(OH)_2 \cdot CuCl_2$
40,5 Gew.-% Monoethanolamin
40,0 Gew.-% Wasser
(4% wäßrige Lösung) Kupfer-Auswaschung 10,5%.

Beispiel 3

15,0 Gew.-% $Cu(OH)_2$ $CuCO_3$
16,0 Gew.-% Monoethanolamin
16,0 Gew.-% Aminoethylethanolamin
25,0% $H_3BO_3$
38,0% $H_2O$
(4% wäßrige Lösung) Auswaschung:
Cu 10,5%
B 85,5%.

Beispiel 4

13,5% $Cu(OH)_2$)
25,0% Borsäure
17,5% Monoethanolamin
17,5% Aminopropanol
26,5% Wasser
(4% wäßrige Lösung) Auswaschung:
Cu 7,7%
B 86,5%

Beispiel 5

50% $Cu(BF_4)_2$-Lösung (50% in Wasser gelöst)
30% Monoethanolamin
20% $H_2O$
(3% wäßrige Lösung, definiert wie oben) Auswaschung:
Cu 10,5%
F 70,0%
B 75,0%.

Beispiel 6

16,5 $Cu(OH)_2$ $CuCO_3$
10% $NH_4HF_2$
36,0% Monoethanolamin
3,5% $H_2O$
(3% wäßrige Lösung) Auswaschung:
Cu 0,5%
F 78,5%

Beispiel 7

70% Kupferborat-Paste (50% in Wasser dispergiert)
30% Monoethanolamin
(4% wäßrige Lösung) Auswaschung:
Cu 7,5%
B 85,0%.

Beispiel 8

75% Kupferborat-Paste (50% in Wasser dispergiert)
25% Monoethanolamin
(4% wäßrige Lösung) Auswaschung:
Cu 6,2%
B 66,1%.

Vergleichsversuch 1

Chromhaltige Salze:
1a) Typ CKB
Gehalt an Cu 8,6%
Gehalt an Cr 13,4%
Gehalt an B 4,4%
1b) Typ CKF
Gehalt An Cu 7,7%
Gehalt an Cr 25,5%
Gehalt an F 14,5%

| 1a) | Typ CKB | Auswaschung in % |
|---|---|---|
| | Cu | 8,0 |
| | Cr | 2,0 |
| | B | 93,5 |
| 1b) | Typ CKF | Auswaschung in % |
| | Cu | 13,5 |
| | Cr | 18,5 |
| | F | 72,5 |

Vergleichsversuch 2 (nicht erfindungsgemäß)

12,0% CuO
22,0% Ethylendiamin
12,0% KHF$_2$
54,0% Wasser
3% in Wasser gelöst
Auswaschung:
Cu 75,5%
F 92,5%.

**Patentansprüche**

1. Konzentrat zum Imprägnierung von massivem Holz für den Holzschutz, auf der Grundlage eines Kupfersalzes und Monoethanolamin und ggf. eines Salzes mit einem fungiziden Anion, dadurch gekennzeichnet, daß das Konzentrat 5 bis 50 Gew.-% an Monoethanolamin und ggf. weiteres Alkali enthält, so daß sich ein pH-Wert von mindestens 8 einstellt.

2. Mittel nach Anspruch 1, enthaltend zusätzlich ein borsaures Salz bzw. Borsäure.

3. Verfahren zur Kesseldruckimprägnierung von Holz, dadurch gekennzeichnet, daß man eine wäßrige Lösung eines Kupfersalzes und von Monoethanolamin verwendet, die durch Verdünnen des Konzentrats gemäß Anspruch 1 mit Wasser hergestellt wurde und die einen pH-Wert von 8 oder mehr aufweist.

4. Verfahren zur Herstellung einer Imprägnierlösung für das Verfahren gemäß Anspruch 3, dadurch gekennzeichnet, daß man ein Konzentrat gemäß einem der Ansprüche 1 oder 2 mit Wasser verdünnt, oder ein Konzentrat gemäß Anspruch 1 mit Wasser verdünnt und den pH-Wert der Lösung durch Zusatz vor Monoethanolamin und gegebenenfalls Alkali auf pH 8 oder darüber bringt.

**Claims**

1. A concentrate for impregnating solid wood in order to preserve the latter, based on a copper salt and monoethanolamine and, if required, a salt with a fungicidal anion, wherein the concentrate contains from 5 to 50% by weight of monoethanolamine and, if required, further alkali such that a pH of not less than 8 is established.

2. An agent as claimed in claim 1, additionally containing a salt of boric acid, or boric acid.

3. A process for the pressure impregnation of wood, wherein an aqueous solution of a copper salt and of monoethanolamine is used, the said solution being prepared by the dilution of the concentrate as claimed in claim 1 with water and having a pH of 8 or higher.

4. A process for the preparation of an impregnating solution for the process as claimed in claim 3, wherein a concentrate as claimed in claim 1 or 2 is diluted with water, or a concentrate as claimed 1 is diluted with water, and the pH of the solution is brought to 8 or higher by adding monoethanolamine and, if necessary, an alkali.

**Revendications**

1. Concentré pour l'imprégnation de bois massif pour la protection du bois, à base d'un sel de cuivre et de monoéthanolamine et éventuellement d'un sel ayant un anion fongicide, caractérisé par le fait que le concentré contient 5 à 50% en poids de monoéthanolamine et éventuellement d'autre alcali, de manière qu'il s'ajuste au pH d'au moins 8.

2. Moyen selon la revendication 1, contenant additionnellement un sel d'acide borique ou de l'acide borique.

3. Procédé pour l'imprégnation du bois sous pression dans une chaudière, caractérisé par le fait que l'on utilise une solution aqueuse d'un sel de cuivre et de méthanolamine, qui a été préparée par dilution du concentré selon la revendication 1 avec de l'eau et qui présente un pH de 8 ou plus.

4. Procédé de préparation d'une solution d'imprégnation pour le procédé selon la revendication 3, caractérisé par le fait que l'on dilue avec de l'eau un concentré selon l'une des revendications 1 ou 2 ou qu'on dilue un concentré selon la revendication 1 et qu'on porte le pH de la solution à 8 ou plus par addition de monoéthanolamine et éventuellement d'alcali.